Europäisches Patentamt

European Patent Office

Office européen des brevets

(19)

(11) Veröffentlichungsnummer : **0 028 007**
**B1**

# (12) EUROPÄISCHE PATENTSCHRIFT

(45) Veröffentlichungstag der Patentschrift :
26.10.83

(21) Anmeldenummer : 80106451.0

(22) Anmeldetag : 23.10.80

(51) Int. Cl.³ : **H 04 B   7/26**

(54) **Funksystem mit Synchronisation der Teilnehmereinrichtungen.**

(30) Priorität : 25.10.79 DE 2943059

(43) Veröffentlichungstag der Anmeldung :
06.05.81 Patentblatt 81/18

(45) Bekanntmachung des Hinweises auf die Patenterteilung : 26.10.83 Patentblatt 83/43

(84) Benannte Vertragsstaaten :
AT BE CH GB IT LI LU NL

(56) Entgegenhaltungen :
EP A 0 005 045
DE A 1 954 754
DE A 2 048 037
DE A 2 060 461
DE A 2 645 901
DE C 889 311
DE C 2 517 073
US A 2 530 140
US A 2 723 309

NACHRICHTEN   TECHNISCHE   ZEITSCHRIFT,
Jahrgang 27, Heft 7, Juli 1974, Berlin, DE, W.
HEROLD : « Ein Funktelephonsystem mit Codemultiplex », Seiten 253-259

(73) Patentinhaber : **Licentia Patent-Verwaltungs-GmbH
Theodor-Stern-Kai 1
D-6000 Frankfurt/Main 70 (DE)**

(72) Erfinder : **Engel, Harald, Dipl.-Ing.
Fünf-Bäume-Weg 184
D-7900 Ulm (DE)**
Erfinder : **Walz, Ingolf, Dipl.-Ing.
Eichenstrasse 14
D-7904 Erbach (DE)**
Erfinder : **Kukla, Hubert F.
Am Fuchsberg 5
D-6113 Babenhausen (DE)**

(74) Vertreter : **Schickle, Gerhard, Dipl.-Ing. et al
Licentia Patent-Verwaltungs-GmbH Theo-
dor-Stern-Kai 1
D-6000 Frankfurt/Main 70 (DE)**

**0 028 007**

## Funksystem mit Synchronisation der Teilnehmereinrichtungen

Die Erfindung betrifft ein Funksystem nach dem Oberbegriff des Anspruchs 1, welcher einen internen Stand der Technik wiedergibt.

Es ist bekannt, zur Synchronisierung von Teilnehmern in einem Funknetz eine Präambelsynchronisation oder eine Dauersynchronisation durchzuführen. Bei der Präambelsynchronisation wird bei jedem Gesprächswechsel das Synchronisationsraster neu festgelegt. Teilnehmer, die die Präambel nicht ungestört empfangen, können die Nachricht nicht verstehen. Bei der Dauersynchronisation empfangender Teilnehmer durch die jeweils sendende Station (durch über die Nachricht verteilte Synchronzeichen oder bei Datenübertragung durch Ableiten des Taktes direkt aus dem einlaufenden Datenstrom beim empfangenden Teilnehmer) ist für eine gewisse Zeit der Empfang einer ungestörten, an sich entzifferbaren Nachricht erforderlich, bis nach einer Störung wieder ein Entschleiern einer verschleierten Nachricht möglich wird.

Es ist auch bekannt, bei reinen Funkverbindungen zur verschlüsselten Nachrichtenübertragung alle Stationen durch eine Zentrale zu synchronisieren, vgl. die DE-A-10 54 754 oder die US-A-25 30 140.

Es ist ferner bekannt, bei Linienverbindungen mit Leitern sämtliche Stationen für jeweils eine Richtung durch je einen Taktgeber an den Enden der Leitung zu synchronisieren, vgl. die DE-A-20 48 037 und die DE-A-20 60 461. Dabei können immer nur diejenigen Stationen mithören, die in Rufrichtung hinter einer rufenden Station liegen.

Aus der DE-A-20 60 461 ist es weiter bekannt, bei einer Ringleitung sämtliche Stationen durch einen einzigen Generator zu synchronisieren und die Ringleitung durch Laufzeitglieder phasenrichtig zu schließen. Eine solche Ringleitung ist jedoch bei einem Funknetz mit Relaisstationen nicht praktikabel.

Aufgabe der Erfindung ist es, ein Funknetz anzugeben, welches bei komplexer Netzstruktur und Austausch von verschleierten oder verschlüsselten Informationen eine störungsunempfindliche Synchronisation aller Teilnehmereinrichtungen erlaubt, und wobei jeder Teilnehmer jeden anderen hören können soll.

Die Aufgabe wird durch die im Anspruch 1 bzw. 2 gekennzeichneten Merkmale gelöst. Die weiteren Ansprüche beschreiben vorteilhafte Ausbildungen bzw. Weiterbildungen der Erfindung.

In einem komplexen Sprechfunknetz, bei dem jeder Teilnehmer jeden anderen hören und sprechen können soll, in dem verschleiert gesprochen wird und in dem Übertragungsstörungen auftreten können, muß eine einheitliche Langzeit-Synchronisation vorgenommen werden. Dabei ist gleichgültig, ob die Verschleierung mit Bandvertauschung (ohne Zeitverzögerung) oder über Zeitverwürfelung (mit Zeitverzögerung) vorgenommen wird.

In einem ausgedehnten Netz, in dem in Übertragungsstrecken aus Kabel- und Funkstrecken bestehen, treten außerdem erhebliche Signallaufzeiten auf, die eine einheitliche Langzeit-Synchronisation ohne besondere Maßnahmen ausschließen.

Die Erfindung erlaubt eine Synchronisation aller Teilnehmereinrichtungen durch die Anordnung eines Hauptsynchronisators im Netzsternpunkt, und dadurch, daß die Signallaufzeiten vom Netzsternpunkt zu allen Teilnehmereinrichtungen an der Peripherie gleich groß gemacht werden.

Die Erfindung soll anhand der Figuren näher beschrieben werden.

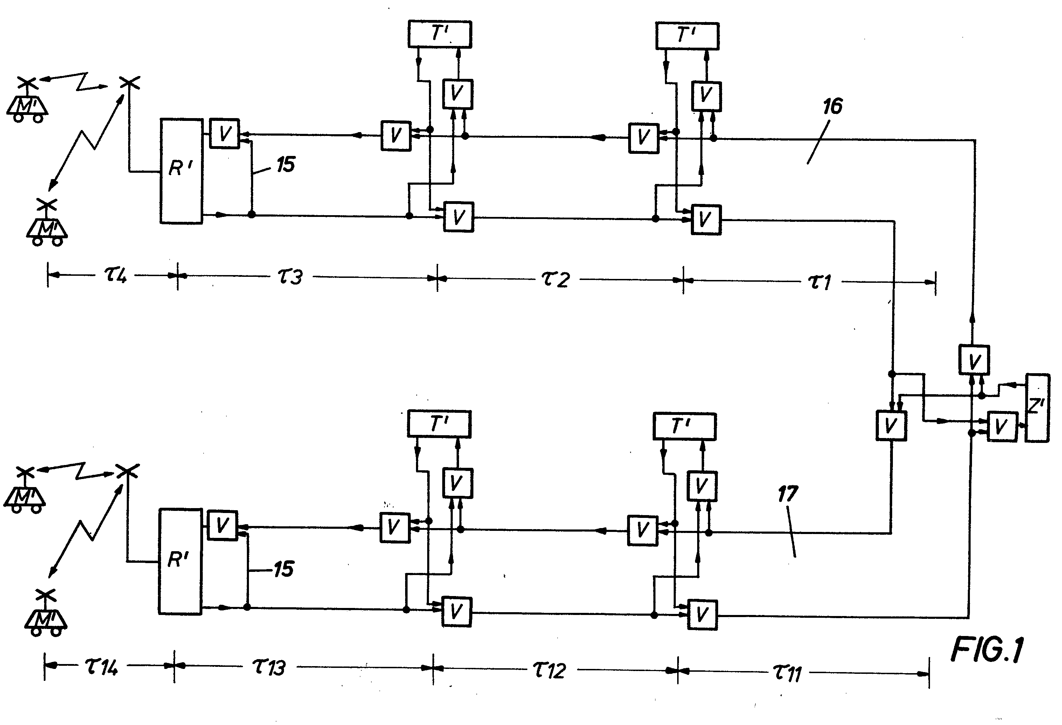

Figur 1 zeigt eine sternförmige Netzkonfiguration, in der offen ohne Verschleierung/Verschlüsselung gesprochen wird.

Dabei bedeuten :

T' = Draht-Teilnehmereinrichtung,
Z' = Teilnehmereinrichtung im Netzsternpunkt,
M' = mobile Teilnehmereinrichtung,
R' = Funkrelaisstellen,
15 = Verbindung zwischen Empfänger und Sender,
16 = erster Netzzweig,
17 = zweiter Netzzweig,
V = Summierverstärker.

$\tau 1$ bis $\tau 4$ und $\tau 11$ bis $\tau 14$ sind die Signallaufzeiten zwischen den Netzknoten.

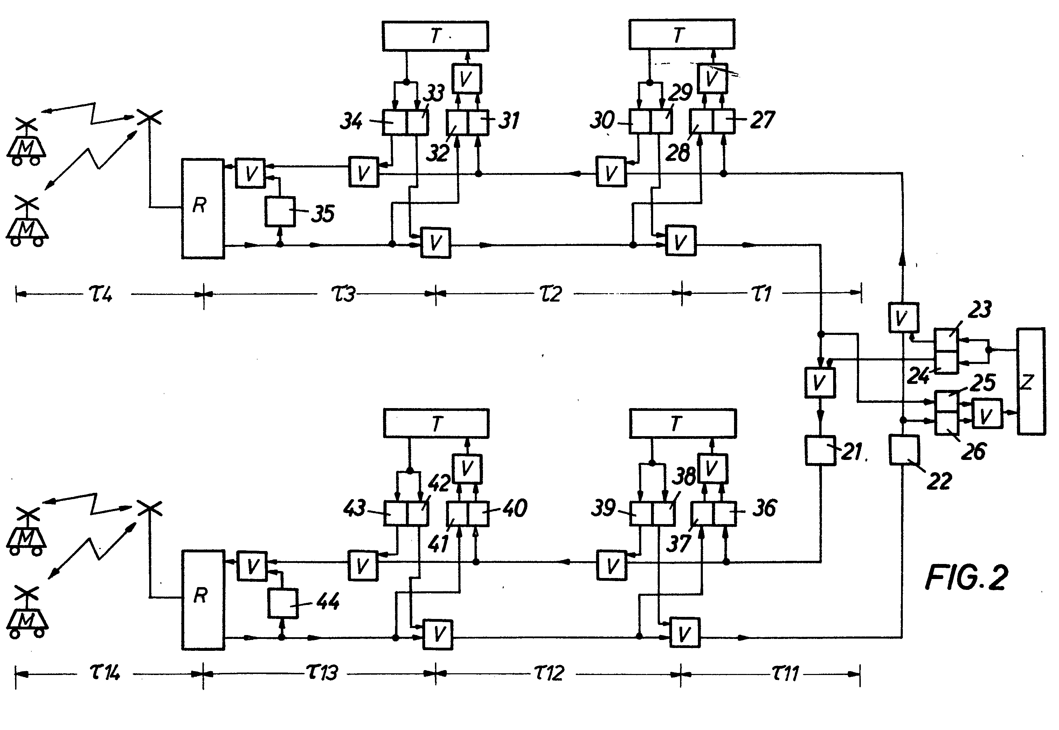

Figur 2 zeigt ein Ausführungsbeispiel der Erfindung. Dort bedeuten :

R = Funkrelaisstelle,
T = Draht-Teilnehmereinrichtung mit Verschleierungs-/Verschlüsselungszusatz,
Z = Teilnehmer im Netzsternpunkt mit Verschleierungs/Verschlüsselungszusatz und Hauptsynchronisator,
M = mobile Teilnehmereinrichtung mit Verschleierungs-/Verschlüsselungszusatz,
21 und 22 = Laufzeitglieder, um die Laufzeit in beiden Zweigen des Netzes auf denselben Wert ($1/2 \tau$ max) zu bringen,
23 bis 26 = Laufzeitglieder im Netzsternpunkt mit einer Laufzeit von $1/2 \tau$ max,

2

27 und 29 = Laufzeitgleider mit Wert $(1/2 \tau \, max - \tau2 - \tau3 - \tau4)$.
28 und 30 = Laufzeitglieder mit Wert $(1/2 \tau \, max - \tau1)$,
35 = Laufzeitglied mit Wert $(\tau \, max - 2 \tau 4)$,
44 = Laufzeitglied mit Wert $(\tau \, max - 2 \tau 14)$.

Hier werden zwischen Draht-Teilnehmereinrichtung und Kabelanschlüssen vier Laufzeitglieder benötigt, damit in allen Verkehrsrichtungen zwischen sendender und empfangenden Teilnehmereinrichtungen dieselbe maximale Laufzeit erzielt wird. Diese maximale Signallaufzeit ergibt sich zu $\tau \, max = \tau1 + \tau2 + \tau3 + \tau4 + \tau11 + \tau12 + \tau13 + \tau14$. Das Senderaster eilt gegenüber dem Empfangsrater bei allen Teilnehmereinrichtungen um $\tau \, max$ vor. Zur Verständigung der mobilen Teilnehmer untereinander, die sich im Bereich einer Relaisstation befinden, ist in dieser ein Laufzeitausgleich erforderlich (Zeitglieder 35 und 44).

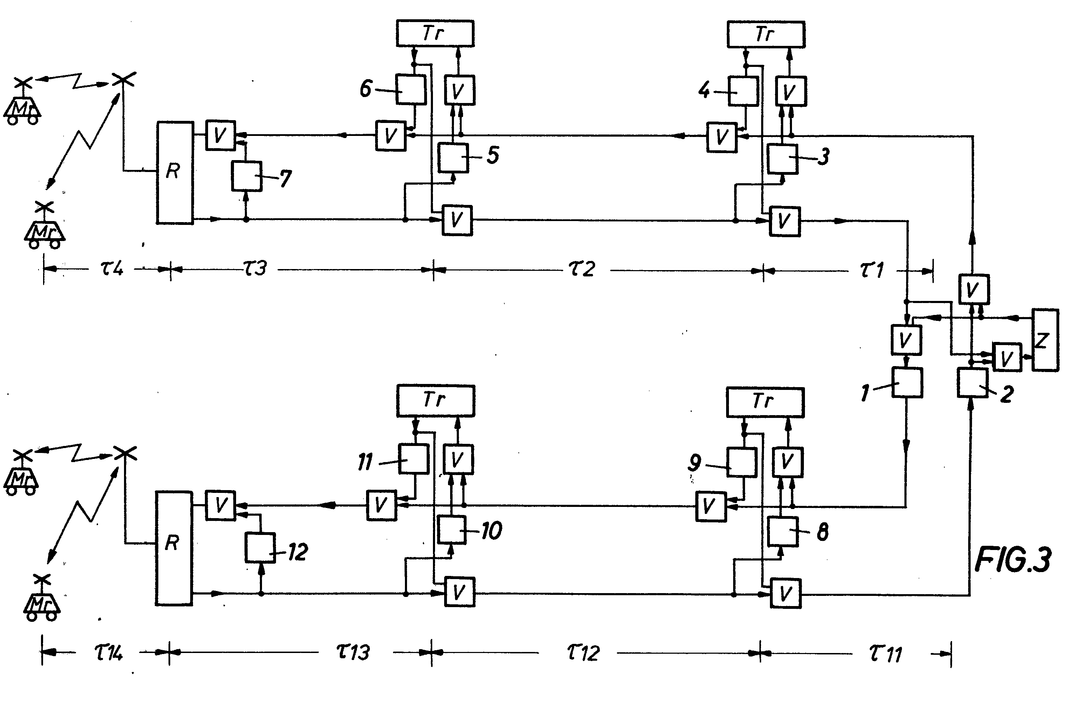

In Figur 3 ist ein bevorzugtes Ausführungsbeispiel der Erfindung dargestellt.

Hierbei bedeuten :

Mr = mobile Teilnehmereinrichtung mit Verschleierungs-/Verschlüsselungszusatz und Rasterversatz von $\tau \, max$,

Tr = Draht-Teilnehmereinrichtung mit Verschleierungs-/Verschlüsselungszusatz und Rasterversatz zwischen $2 \tau1$ und $2(\tau11 + \tau12)$,

1 und 2 = Laufzeitglieder, um die Laufzeit in beiden Zweigen des Netzes auf denselben Wert $(1/2 \tau \, max)$ zu bringen,

3 und 4 = Laufzeitglieder mit Wert $2 \tau1$,

5 und 6 = Laufzeitglieder mit Wert $2 (\tau1 + \tau2)$,

7 und 12 = Laufzeitglieder mit Wert $(\tau \, max - 2 \tau4)$ bzw. $(\tau \, max - 2 \tau14)$,

8 und 9 = Laufzeitglieder mit Wert $2 \tau11$,

10 und 11 = Laufzeitglieder mit Wert $2 (\tau11 + \tau12)$.

In dieser Anordnung werden zwischen Draht-Teilnehmereinrichtungen und Kabelanschlüssen nur zwei (gleiche) Laufzeitglieder benötigt. Die ortsfesten Teilnehmereinrichtungen haben unterschiedliche Zeiten eingestellt, um die das Senderaster gegenüber dem Empfangsrater voreilt.

Bei den mobilen Teilnehmern hat der Versatz des Senderasters wie nach fig. 2 den Wert $\tau \, max = \tau1 + \tau2 + \tau3 + \tau4 + \tau11 + \tau12 + \tau13 + \tau14$. Mobile Teilnehmer können, gleichgültig ob sie sich über Relais oder über den Knoten verständigen, immer nach der Maximallaufzeit empfangen. Ortsfeste Teilnehmer können sämtlichen Sprechverkehr mithören und im richtigen Raster einsprechen.

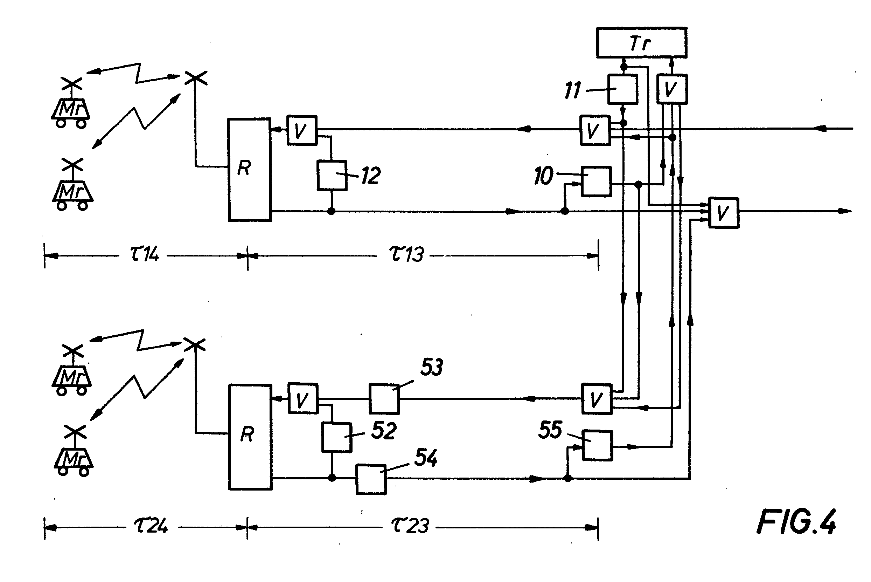

Sind Abzweige an Teilnehmerstellen zwischen Relaisstelle und Netzsternpunkt vorhanden, so werden diese vorteilhafterweise entsprechend Fig. 4 ausgeführt. Die dargestellte Anordnung entspricht der Laufzeitkompensation nach Fig. 3 (bzw. Anspruch 2). Durch zusätzliche Laufzeitglieder muß sichergestellt werden, daß die Laufzeiten in Richtung Peripherie auf beiden Wegen gleich groß sind.

Es bedeuten :

10, 11 und 55 = Laufzeitglieder mit Wert $2(\tau11 + \tau12)$,

53 und 54 = Laufzeitglieder zur Anpassung der beiden Netssweige an gleiche Laufzeit,

12 und 52 = Laufzeitglieder mit Wert $(\tau \, max - 2 \tau14)$ bzw. $(\tau \, max - 2 \tau24)$.

Selbstverständlich kann ein Abzweig auch entsprechend der Kompensation nach Fig. 2 durchgeführt werden.

Die verschiedenen Netzzweige können auch dadurch auf gleiche maximale Laufzeit gebracht werden, daß nur ein Laufzeitglied entweder in den Hinweg oder Rückweg oder Rückweg eingefügt wird. Dieses muß die Summe der Laufzeiten der oben beschriebenen Laufzeitglieder aufweisen, (1 und 2 in Fig. 3, bzw. 21 und 22 in Fig. 2, bzw. 53 und 54 in Fig. 4). Das Funknetz ist dann zwar nicht mehr vollständig symmetrisch, eine Nachrüstung in bestehenden Kabelstrecken wird jedoch einfacher.

Bei gleicher Maximallaufzeit $\tau \, max$ können mobile Teilnehmereinrichtungen sowohl in einem Netz mit Laufzeitkompensation nach Fig. 2 als auch in einem Netz nach Fig. 3 (oder 4) eingesetzt werden. Ferner ist ein Netz denkbar, in dem Teilnehmereinrichtungen sowohl gemäß Fig. 2 als auch gemäß Fig. 3 angeschlossen werden.

In dem erfindungsgemäßen Funksystem läßt sich verschleierter oder verschlüsselter Nachrichtenaustausch ebenso unproblematisch abwickeln, wie in einem System ohne Verschleierung oder Verschlüsselung. Selbstverständlich kann die Erfindung auch für PCM-codierten Nachrichtenverkehr vorteilhaft eingesetzt werden.

**Ansprüche**

1. Funksystem mit einem komplexen, sternförmigen, duplexfähigen Netz von Funk- und Kabelstrecken mit Synchronisation der Teilnehmereinrichtungen durch einen Hauptsynchronisator sowie mit Funkrelaisstellen, in dem verschleierte oder verschlüsselte Nachrichten von wechselnden Teilnehmereinrichtungen zu allen anderen Teilnehmereintichtungen übertragen werden, dadurch gekennzeichnet, daß bei Anordnung des Hauptsynchronisators im Netzsternpunkt (Z), der das Empfangsraster aller Teilnehmereinrichtungen vorgibt, zwischen Kabelanschluß und Draht-Teilnehmereintichtung (T, Z) Laufzeitglider (23 bis 24, 36 bis 43) angeordnet sind, durch die die Signallaufzeit von einer Teilnehmereintichtung (T, M, Z) zu jeder anderen gleich einer maximalen Laufzeit $\tau$ max wird, welche gleich der Laufzeit zwischen den beiden am weitesten voneinander entfernten Stationen ist, und daß in jeder Teilnehmereinrichtung (T, M, Z) das Senderaster gegenüber dem Empfangsraster um diese maximale Laufzeit voreilt (Fig. 2).

2. Funksystem mit einem komplexen, sternförmigen, duplexfähigen Netz von Funk- und Kabelstrecken mit Synchronisation der Teilnehmereinrichtungen durch einen Hauptsynchronisator sowie mit Funkrelaisstellen, in dem verschleierte oder verschlüsselte Nachrichten von wechselnden Teilnehmereinrichtungen zu allen anderen Teilnehmereinrichtungen übertragen werden, dadurch gekennzeichnet, daß bei Anordnung des Hauptsynchronisators im Netzsternpunkt (Z), der das Empfangsraster aller Teilnehmereinrichtungen vorgibt, zwischen Kabelanschluß und Drahtteilnehmereinrichtung (Tr) nur in den Zweigen, über die die Nachrichten von/zu den vom Netzternpunkt (Z) weiter entfernt liegenden Teilnehmereinrichtungen empfangen/gesendet werden, Laufzeitglieder (3 bis 6, 8 bis 11) angeordnet sind, daß deren Laufzeit doppelt so groß ist wie die Signallaufzeit von der Teilnehmereinrichtung zum Netzsternpunkt (Z) und daß in jeder Teilnehmereinrichtung (Tr, Mr) das Senderaster gegenüber dem Empfangsraster um eine Zeit voreilt, die doppelt so groß ist wie die Signallaufzeit von der Teilnehmereinrichtung zum Netzsternpunkt, wobei die Teilnehmereinrichtung im Netzsternpunkt (Z) keinen Versatz zwischen Sende- und Empfangsraster benötigt (Fig. 3).

3. Funksystem nach Anspruch 1 oder 2, dadurch gekennzeichnet, daß in der Funkrelaisstelle (R) in den Zweig, der Empfängerausgang mit Sendereingang verbindet, ein Laufzeitglied (7, 12, 35, 44, 52) eingebaut ist, dessen Signallaufzeit gleich der Differenz aus Maximallaufzeit $\tau$ max im Netz und dem doppelten Wert der Signallaufzeit über die Funkstrecke ist (Fig. 2, 3 und 4).

4. Funksystem nach Anspruch 1 oder 2, dadurch gekennzeichnet, daß alle vom Netzsternpunkt (Z) ausgehenden Zweige durch Laufzeitglieder (1, 2, 21, 22) auf gleiche Laufzeit gebracht sind (Fig. 2 und 3).

5. Funksystem nach einem der Ansprüche 2 oder 4, dadurch gekennzeichnet, daß alle von einem Netzknoten außerhalb des Netzsternpunkts ausgehenden Zweige durch Laufzeitglieder (53, 54) auf gleiche Laufzeit gebracht sind (Fig. 4).

6. Funksystem nach Anspruch 1, dadurch gekennzeichnet, daß die Teilnehmereinrichtung im Netzternpunkt keine Laufzeitglieder enthält, wenn hier kein Versatz zwischen Sende- und Empfangsraster besteht.

## Claims

1. Wireless system with a complex, star-shaped network, capable of duplex operation, of wireless and cable routes with synchronisation of the subscriber equipments through a main synchroniser as well as with wireless relay stations, in which scrambled or coded messages are transmitted from changing subscriber equipments to all other subscriber equipments, characterised thereby, that with arrangement of the main synchroniser in the network star point (Z), which predetermines the reception raster of all subscriber equipments, transit time members (23 to 34, 36 to 43), through which the signal transit time from one subscriber equipment (T, M, Z) to every other one becomes equal to a maximum transit time $\tau$ max, which is equal to the transit time between cable terminal and wire subscriber equipment (T, Z) and that the transmission raster in each subscriber equipment (T, M, Z) leads relative to the reception raster by this maximum transit time (Fig. 2).

2. Wireless system with a complex, star-shaped network, capable of duplex operation, of wireless and cable routes with synchronisation of the subscriber equipments through a main synchroniser as well as with wireless relay stations, in which scrambled or coded messages are transmitted from changing subscriber equipments to all other subscriber equipments, characterised thereby, that with arrangement of the main synchroniser in the network star point (Z), which predetermines the reception raster of all subscriber equipements, transit time members (3 to 6, 8 to 11) are arranged between cable terminal and wire subscriber equipement (Tr) only in the branches, through which the messages are received/transmitted from/to the subscriber equipments lying further remote from the network star point (Z), that their transit time is twice as great as the signal transit time from the subscriber equipment to the network star point (Z) and that the transmission raster in each subscriber equipment (Tr, Mr) leads relative to the reception raster by a time which is twice as great as the signal transit time from the subscriber equipment to the network star point, while the subscriber equipment in the network star point (Z) requires no displacement between transmission raster and reception raster (Fig. 3).

3. Wireless system according to claim 1 or 2, characterised thereby, that in the wireless relay station (R), a transit time member (7, 12, 35, 44, 52), the signal transit time of which is equal to the difference between the maximum transit time $\tau$ max in the network and twice the value of the signal transit time over the wireless route, is installed in the branch which connects receiver output with transmitter input (Figs. 2, 3 and 4).

4. Wireless system according to claim 1 or 2, characterised thereby, that all branches emanating from the network star point (Z) are brought to the same transit time through transit time members (1, 2, 21, 22) (Figs. 2 and 3).

5. Wireless system according to one of the claims 2 or 4, characterised thereby, that all branches emanating from a network junction outside the network star point are brought to the same transit time through transit time members (53, 54) (Fig. 4).

6. Wireless system according to claim 1, characterised thereby, that the subscriber equipment in the network star point contains no transit time members when no displacement between transmission raster and reception raster exists here.

## Revendications

1. Système radio comprenant un réseau complexe en étoile, susceptible de duplexage, de trajets radio et à câbles, avec synchronisation des postes d'abonnés par un synchronisateur principal et avec postes relais radio, système où des messages masqués ou codés de divers postes d'abonnés sont transmis en ce que, lorsque le synchronisateur principal est disposé au point neutre (Z) du réseau, lequel prédétermine la trame de réception de tous les postes d'abonnés, on prévoit, entre le raccordement de câble et le poste d'abonné (T, M, Z), des circuits de retard (23 à 34, 36 à 43), grâce auxquels le temps de transit des signaux depuis un poste d'abonné (T, M, Z) jusqu'à chacun des autres postes d'abonnés devient égal au temps de transit maximal $\tau$ max, lequel est égal au temps de transit entre les deux stations les plus éloignées l'une de l'autre et en ce que, dans chaque poste d'abonné (T, M, Z), la trame d'émission est décalée en avant, de la valeur de ce temps de transit maximal, par rapport à la trame de réception (figure 2).

2. Système radio comprenant un système complexe en étoile, susceptible de duplexage, de trajets radio et câbles, avec synchronisation des postes d'abonnés par un synchronisateur principal et avec poste relais radio, système où des messages masqués ou codés de divers postes d'abonnés sont transmis vers tous les autres postes d'abonnés, caractérisé en ce que, lorsque le synchronisateur principal est disposé au point neutre (Z) du réseau, lequel prédétermine la trame de réception de tous les postes d'abonnés, on prévoit, entre le raccordement de câbles et le poste d'abonné (Tr) seulement dans les branches par lesquelles les messages sont reçus/émis de/vers les postes d'abonnés plus éloignés du point neutre (Z) du réseau, des circuits de retard (3 à 6, 8 à 11) ; en ce que leur temps de transit est le double du temps de transit des signaux depuis le poste d'abonné jusqu'au point neutre (Z) du réseau ; et en ce que, dans chaque poste d'abonné (Tr, Mr), la trame d'émission est décalée en avant par rapport à la trame de réception d'un temps qui représente le double du temps de transit des signaux depuis le poste d'abonné jusqu'au point neutre du réseau, cependant que le poste d'abonné situé au point neutre (Z) du réseau ne nécessite pas un décalage entre la trame d'émission et la trame de réception (figure 3).

3. Système radio suivant la revendication 1 ou 2, caractérisé par l'incorporation, au poste relais radio (R), dans le branchement reliant la sortie du récepteur à l'entrée de l'émetteur, d'un circuit de retard (7, 12, 35, 44, 52) dont le temps de transit des signaux est égal à la différence entre le temps de transit maximal $\tau$ max dans le réseau et la double valeur du temps de transit des signaux sur le trajet radio (figures 2, 3 et 4).

4. Système radio suivant la revendication 1 ou 2, caractérisé en ce que tous les branchements partant du point neutre (Z) du réseau sont amenés à un même temps de transit par des circuits de retard (1, 2, 21 et 22) (figures 2 et 3).

5. Système radio suivant une quelconque des revendications 2 ou 4, caractérisé en ce que tous les branchements partant d'un nœud du réseau, en dehors du point neutre du réseau, sont amenés à un même temps de transit par des circuits de retard (53, 54) (figure 4).

6. Système suivant la revendication 1, caractérisé en ce que le poste d'abonné situé au point neutre du réseau ne contient pas de circuit de retard lorsqu'il n'existe pas de décalage entre la trame d'émission et la trame de réception à cet endroit.

FIG.1

FIG.2

0 028 007

FIG.3

0 028 007

FIG.4